# FASCICULE DE BREVET EUROPEEN

(11) **EP 0 524 299 B1**
(45) Date de publication et mention de la délivrance du brevet: **05.04.1995**
(21) Numéro de dépôt: 92905767.7
(22) Date de dépôt: 11.02.1992
(51) Int. Cl.: A01D 34/70

(54) **DISPOSITIF PERMETTANT D'ASSURER LE PRELEVEMENT ET LE STOCKAGE D'HERBES OU PRODUITS SIMILAIRES ET VEHICULES EQUIPES D'UN TEL DISPOSITIF**
GERÄT ZUR SICHERSTELLUNG DER AUFNAHME UND DER LAGERUNG VON GRAS ODER DERGLEICHEN UND MIT EINEM SOLCHEN GERÄT AUSGERÜSTETE FAHRZEUGE
DEVICE FOR PICKING UP AND STORING GRASS OR SIMILAR PRODUCTS AND VEHICLES FITTED WITH SUCH DEVICE

(30) Priorité: 12.02.1991 FR 9101859
(43) Date de publication de la demande: 27.01.1993
(73) Titulaire: CREATIONS DELERY, F-01600 Trevoux (FR); S.A. KUBOTA EUROPE, F-95100 Argenteuil (FR)
(72) Inventeur: DELERY, Marc, F-01600 Trévoux (FR); HARRIS, Alistair, F-01240 Saint Paul de Varax (FR); FURUTA, Teruhisa, F-95230 Soisy-S/Montmorency (FR); VAUGRENTE, Alain, F-92700 Colombes (FR)
(74) Mandataire: Laurent, Michel
(86) Numéro de dépôt international: FR9200121
(87) Numéro de publication internationale: WO9213438

(56) Documents cités:
- EP-A- 0 165 602
- EP-A- 0 221 478
- GB-A- 2 223 659
- US-A- 3 478 894
- US-A- 4 426 830
- US-A- 4 523 788
- US-A- 4 782 650
- US-A- 4 838 012

## Description

La présente invention concerne un perfectionnement apporté au dispositif permettant d'assurer le prélèvement sur le sol de produits en vrac, en vue d'assurer leur transfert depuis le site de prélèvement jusqu'à une zone de déchargement. Elle concerne également les véhicules équipés d'un tel dispositif.

Dans de nombreux domaines, on se trouve confronté au problème d'avoir à prélever une matière sur un site en vue de la transporter dans une autre zone. Un tel problème se pose notamment lors de l'entretien d'espaces verts (terrains de sport, de golf, pelouses..) pour ramasser l'herbe après une tonte, éliminer les feuilles ou autres détritus.

Dans la suite de la description, l'invention sera décrite pour une telle application (ramassage de l'herbe après une tonte), mais il est évident que cela n'est pas limitatif et que l'invention pourrait être appliquée dans d'autres domaines où se posent des problèmes similaires, tels que par exemple sur des engins utilisés pour nettoyer les sols, notamment les chaussées, trottoirs.. .

A ce jour, les matériels permettant de ramasser l'herbe après une tonte, sont constitués en général d'un véhicule de type "tracteur", sur lequel est monté un ensemble qui permet non seulement d'assurer la coupe de l'herbe, mais également son ramassage et son stockage en vue de son élimination. Un tel ensemble est constitué essentiellement d'une tête déplaçable à proximité de la surface de sol, fixée en général sous le châssis du véhicule, et qui comprend d'une part, des moyens permettant d'assurer la coupe et d'autre part, des moyens permettant d'assurer le transfert de l'herbe dans une enceinte de stockage supportée par ledit véhicule, et disposée en général à l'arrière de ce dernier.

En fonction du volume d'herbe que l'on souhaite stocker et transporter, l'enceinte de stockage peut se présenter sous différentes formes et être constituée par exemple par un simple sac ou par une benne fixe ou basculante.

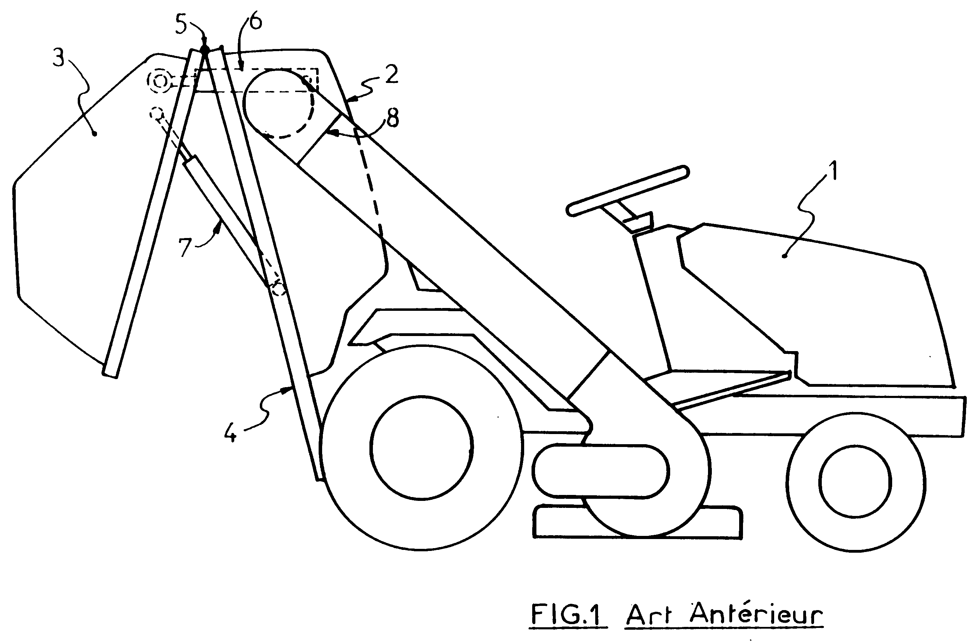

Parmi les différents types de bennes utilisées à ce jour, il a été proposé, comme cela ressort de la figure 1 annexée qui est une vue schématique en élévation, de réaliser des ensembles fixés à l'arrière du véhicule (1) et qui sont constitués essentiellement de deux coques (2,3) qui définissent entre elles le volume de stockage de la matière. Ces deux coques (2,3) sont montées à l'arrière du véhicule par l'intermédiaire d'un portique (4), l'une (2) étant montée fixe au portique (4) et l'autre (3) pouvant pivoter suivant un axe horizontal (5). Des moyens constitués par exemple par un vérin (6) et un système de type "compas à gaz (7)", permettent de commander les déplacements de la coque (3) par rapport à la coque fixe (2), de telle sorte qu'elles puissent être maintenues en position écartée, comme cela est représenté à la figure 1, lorsque l'on souhaite procéder à une opération de déchargement de la benne après remplissage, et qu'elles soient maintenues plaquées l'une contre l'autre pour définir le volume de stockage lors de l'opération de tonte proprement dite.

De telles enceintes donnent satisfaction , mais présentent cependant un inconvénient par le fait que la matière stockée à l'intérieur du bac de récupération ne peut être évacuée que sur le sol, alors que dans certains cas, il est nécessaire de l'effectuer sur un autre site au moyen d'un camion ou benne de grande contenance dont l'accès se trouve situé à un niveau relativement élevé par rapport au sol.

Pour résoudre ce problème, il aurait pu être envisagé de monter le bac de stockage sur le véhicule auquel il était associé au moyen d'un ensemble élévateur approprié. Cependant, une telle solution n'est a priori pas envisageable, compte tenu du fait que les moyens de raccordement (8) entre la sortie de la tête de coupe et de prélèvement de l'herbe montée sur le véhicule et l'enceinte de stockage proprement dite, et qui sont constitués en général par un élément tubulaire, débouchent comme cela est schématisé à la figure 1, dans la partie supérieure de la coque fixe (2), et ont donc une longueur définie qui ne permet pas de déplacer cette dernière.

Il convient également de noter que les solutions antérieures telles qu'illustrées à la figure 1, ont également comme inconvénient d'entraîner un porte-à-faux important à l'arrière du véhicule-tracteur, ce qui nuit à sa mobilité et à sa stabilité et que, par ailleurs, la benne est fixée à demeure sur le véhicule-tracteur qui ne peut donc pas être utilisé pour effectuer d'autres travaux.

Par suite, à ce jour, la seule solution connue du Demandeur permettant de réaliser un déchargement de la benne à différents niveaux par rapport au sol, est celle faisant l'objet du brevet européen 0 221 478 (ce document décrit les caractéristiques du préambule de la revendication 1), une telle solution consistant, d'une manière générale, à réaliser un ensemble porté par une remorque et que l'on raccorde aux trois points d'attelage que comporte tout tracteur conventionnel. Une telle solution est cependant complexe, conduit à un encombrement important de l'ensemble tracteur + benne, qui affecte notablement la maniabilité et la stabilité du véhicule tracteur. Par ailleurs, la commande de l'ensemble pour pouvoir effectuer l'opération de déversement à un niveau élevé par rapport au sol, est très complexe étant donné qu'il convient de faire pivoter vers l'arrière l'ensemble portant l'enceinte de stockage, ce qui implique notamment de prévoir des moyens permettant de stabiliser la remorque lorsque l'on effectue une telle opération. De plus, lorsque l'on souhaite déverser le contenu de la benne directement sur le sol, cela implique également de soulever l'enceinte de stockage pour la dégager de l'ensemble de soufflage ainsi qu'également d'incliner vers l'arrière l'élément télescopique de levage.

Or on a trouvé, et c'est ce qui fait l'objet de la présente invention, une solution simple qui permet de résoudre l'ensemble de ces problèmes et qui, d'une manière générale, porte sur un ensemble qui, non seulement, peut être adapté à tout tracteur conventionnel comportant trois points d'attelage, mais également, n'affecte ni la maniabilité ni la stabilité du tracteur et surtout, permet d'effectuer l'opération de déchargement de la benne de stockage après remplissage aussi bien directement sur le sol sans avoir à soulever l'enceinte qu'à l'intérieur de moyens d'évacuation (camions, bennes de grande capacité...), dont la zone d'accès est située à un niveau élevé par rapport au sol.

D'une manière générale, l'invention concerne donc un perfectionnement apporté aux dispositifs, apte à assurer le prélèvement sur le sol de produits en vrac (herbes, feuilles...) et à assurer leur stockage en vue de les transférer depuis le site de prélèvement jusqu'à une zone de déchargement, et adapté à être monté à l'arrière d'un véhicule tracteur, l'appareillage comprenant :
- une enceinte de stockage constituée de deux coques qui définissent entre elles le volume de stockage proprement dit et qui est connectable au conduit de transfert associé à la tête de coupe et/ou de prélèvement prévue sur le véhicule tracteur, lesdites coques pouvant être écartées l'une de l'autre lorsque l'on souhaite procéder après remplissage à l'opération de déchargement, ladite enceinte étant montée sur un ensemble télescopique permettant de la déplacer en hauteur pour effectuer l'opération de déchargement à différents niveaux,
- une turbine et son dispositif d'entraînement permettant d'assurer le transfert de la matière (herbe, feuilles...) depuis la zone de prélèvement jusqu'à l'intérieur de l'enceinte,
   caractérisé en ce que :
- ledit appareillage est adapté à être monté fixe directement sur et à l'arrière du véhicule tracteur par l'intermédiaire d'un bâti support comportant une traverse horizontale amovible raccordable aux trois points d'attelage que comporte tout tracteur conventionnel;
- l'ensemble télescopique de levage est constitué par une poutre inclinée vers l'arrière et dont l'extrémité libre en forme de potence déborde vers l'arrière par rapport au bâti support;
- l'enceinte de stockage proprement dite est montée à l'extrémité libre en forme de potence de la poutre télescopique par l'intermédiaire d'une articulation permettant d'une part, de maintenir les deux coques élémentaires de l'enceinte accolées l'une contre l'autre et d'autre part, d'assurer l'ouverture desdites coques pour effectuer l'opération de déchargement, et ce aussi bien en position basse qu'à tout niveau par rapport au sol en fonction du déploiement des parties élémentaires de la poutre télescopique.

De préférence, le raccordement du bâti support aux trois points d'attelage que comporte le tracteur, est réalisé de telle sorte que les deux points d'attelage inférieurs sont préalablement immobilisés dans une position déterminée.

Selon une forme de réalisation préférentielle conforme à l'invention, la poutre télescopique de maintien a une section transversale de forme tubulaire carrée et la coque qui lui fait face a un fond profilé de telle sorte qu'il vienne épouser le contour de cette poutre lorsque l'enceinte est en position de remplissage.

Les variations de longueur de la poutre télescopique seront de préférence obtenues au moyen d'un vérin hydraulique.

De plus, afin que l'enceinte de stockage soit, lorsqu'elle est en position basse de remplissage, disposée le plus près possible du tracteur et que, lors de l'opération de déchargement, et ce à quelque niveau que ce soit, elle se trouve écartée automatiquement de l'arrière dudit tracteur, l'inclinaison de la poutre de maintien sera avantageusement comprise entre 15 et 20° par rapport à la verticale.

Par ailleurs, la turbine (et ses moyens d'entraînement) portée par la traverse et qui permet d'assurer le transfert de l'herbe depuis la zone de prélèvement jusqu'à l'intérieur de l'enceinte est positionnée de telle sorte que lorsque l'enceinte est en position basse de remplissage, sa sortie se trouve positionnée en coïncidence avec l'entrée d'un conduit de dimensions correspondantes, s'étendant sur toute la hauteur de l'eneinte et à l'intérieur de celle-ci, et qui permet de déverser l'herbe dans celle-ci par sa partie supérieure. Il convient de noter qu'une telle façon de procéder non seulement facilite l'opération de remplissage, mais également évite que le produit ne s'échappe lorsque l'enceinte est désacouplée de la turbine et que son opération d'ouverture n'est pas encore commandée.

Les moyens de commande de l'ouverture et de la fermeture des demi-coques constituant l'enceinte, peuvent être constitués soit par un ensemble de tringlerie télescopique, soit de préférence par un système à vérin hydraulique à double effet ou équivalent. Lorsque la commande est réalisée par l'intermédiaire d'un vérin hydraulique, ce dernier peut soit comporter un circuit d'alimentation propre, soit avoir un circuit d'alimentation associé au circuit commandant le vérin principal permettant de commander le déploiement de la poutre télescopique.

De plus, les parois de l'enceinte sont conçues de manière à pouvoir permettre un échappement de l'air lorsque la turbine est en action.

Par ailleurs, des moyens additionnels tels que système du type "compas à gaz", peuvent être prévus pour limiter les balancements de l'enceinte.

Enfin, de préférence, des pieds amovibles télescopiques, de longueur réglable, sont associés au support pour assurer le maintien de l'ensemble lorsqu'il n'est pas utilisé et pour également faciliter sa mise en place sur le véhicule tracteur auquel il doit être associé. Les moyens de réglage de la longueur des pieds amovibles seront par exemple constitués par un système à vis sans fin (de type cric), permettant de soulever l'ensemble et de le positionner de manière très précise à un niveau déterminé.

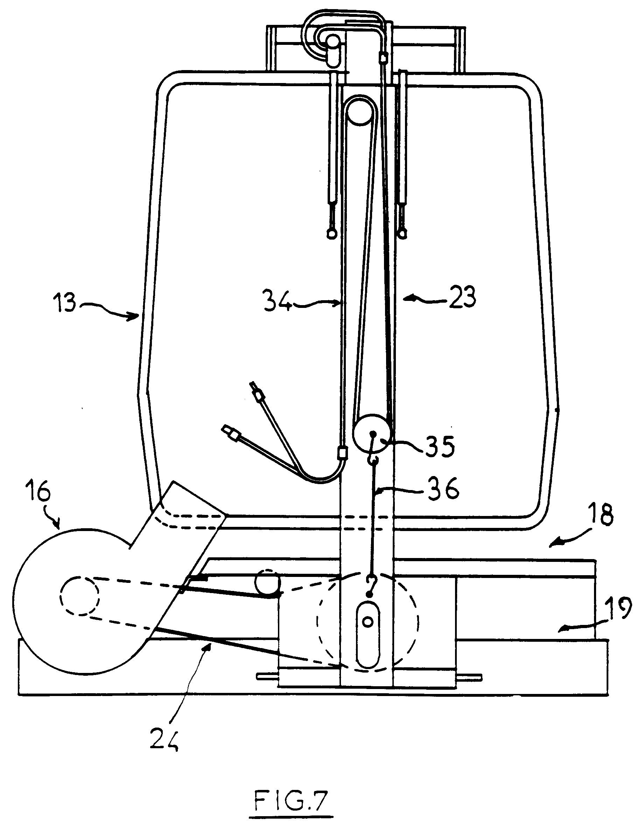

L'invention et les avantages qu'elle apporte seront cependant mieux compris grâce à l'exemple de réalisation décrit ci-après à titre indicatif, mais non limitatif et qui est illustré par les schémas annexés dans lesquels :
- la figure 1 illustre, comme dit précédemment, vu de côté, l'état de la technique le plus proche ;
- les figures 2, 3 et 4 sont des vues de côté montrant la structure et l'utilisation du dispositif conforme à l'invention d'une part, en position basse de remplissage (figure 2) et, d'autre part, lors de la phase de déchargement aussi bien en position basse (figure 3) qu'en position haute (figure 4) ;
- les figures 5, 6 et 7 sont des vues de détail, montrant la structure de l'ensemble d'un dispositif de récupération conforme à l'invention, l'enceinte de stockage étant représentée en position basse, respectivement:
   . figures 5 et 6 : représentation en vue de côté et de dessus d'un dispositif conforme à l'invention lorsqu'il repose sur les pieds escamotables qu'il comporte avant fixation et mise en place à l'arrière d'un véhicule-tracteur,
   . figure 7 : vue de face depuis l'arrière du véhicule montrant plus en détail la manière dont peut être compensée la longueur du circuit hydraulique d'alimentation du vérin de commande d'ouverture et de fermeture des deux demi-coques de l'enceinte lors des variations de hauteur de la poutre télescopique de maintien de ladite enceinte de stockage,

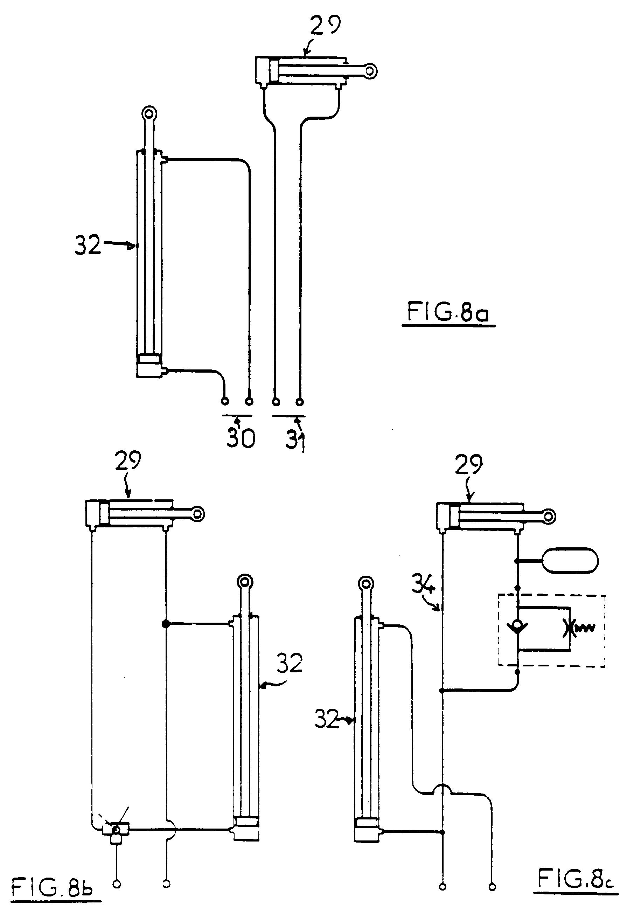

- les figures 8a, 8b,8c sont des schémas illustrant différents types de circuits hydrauliques d'alimentation du vérin de commande d'ouverture et de fermeture des deux demi-coques de l'enceinte et du vérin assurant la commande des déplacements de la poutre télescopique pour en faire varier sa longueur.

Si l'on se reporte aux figures annexées, le dispositif conforme à l'invention se compose d'un ensemble désigné par la référence générale (10), et qui est susceptible d'être adapté à tout tracteur conventionnel (1) comportant trois points d'attelage en vue de l'utiliser, pour assurer le prélèvement sur le sol de produits en vrac (herbes, feuilles..), afin de les transférer jusqu'à une zone de déchargement et d'évacuation. Un tel ensemble comporte une enceinte de stockage (11) portée par le véhicule-tracteur et qui comprend deux demi-coques (12,13) qui définissent entre elles le volume de stockage proprement dit. Le transfert de la matière est réalisé au moyen d'une tête de prélèvement (14) portée par le véhicule (1) et ce, par l'intermédiaire d'un conduit de raccordement (15) associé à une turbine (16) dont la sortie (17) débouche à l'intérieur de l'enceinte (11).

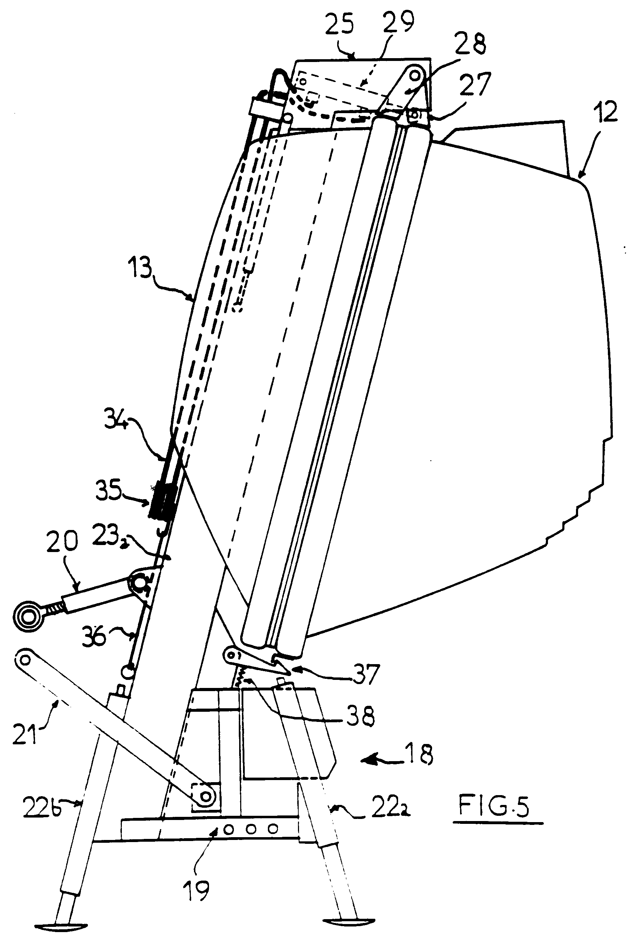

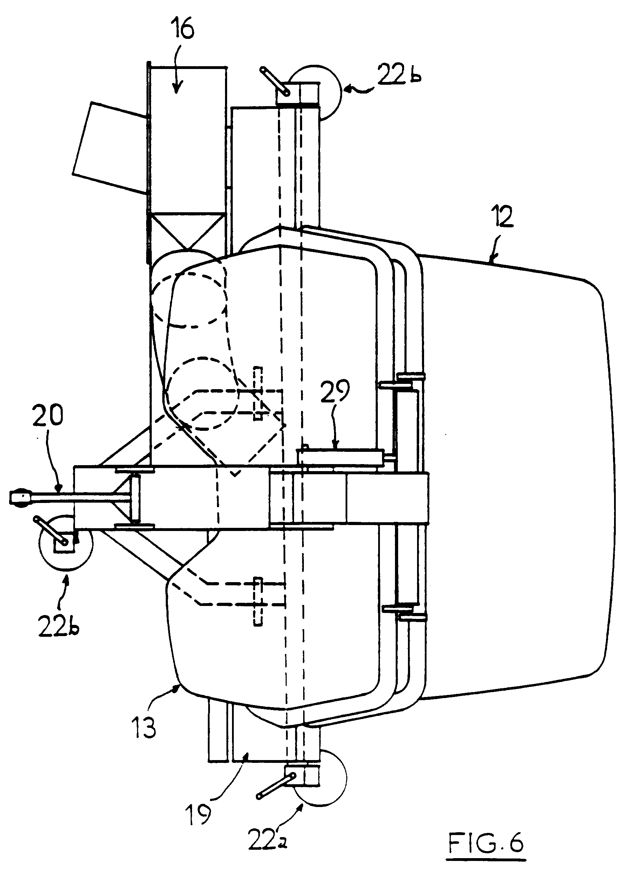

Ainsi que cela ressort des schémas annexés, l'ensemble (10) conforme à l'invention est constitué essentiellement par un bâti support, désigné par la référence générale (18), et constitué essentiellement par une traverse horizontale amovible (19) comportant des systèmes d'attache réglables (20,21) (tirants par exemple), permettant de raccorder l'ensemble aux trois points d'attelage que comporte tout tracteur conventionnel. De préférence, le raccordement est réalisé en ayant préalablement immobilisé dans une position prédéterminée les deux points d'attelage inférieurs. Sur le châssis (18), sont montés des pieds amovibles (22a,22b,22c), de longueur réglable, qui permettent d'assurer le maintien de l'ensemble lorsqu'il n'est pas utilisé (voir figures 5 et 6), et qui facilitent également la mise en place du dispositif sur le véhicule tracteur auquel il doit être associé. Le réglage de la longueur de ces pieds de manière à bien positionner l'ensemble par rapport aux points d'attelage que comporte le tracteur, est de préférence obtenue par un système à vis sans fin de type cric. Lorsque l'ensemble est associé au véhicule tracteur (1), les pieds sont bien entendu escamotés.

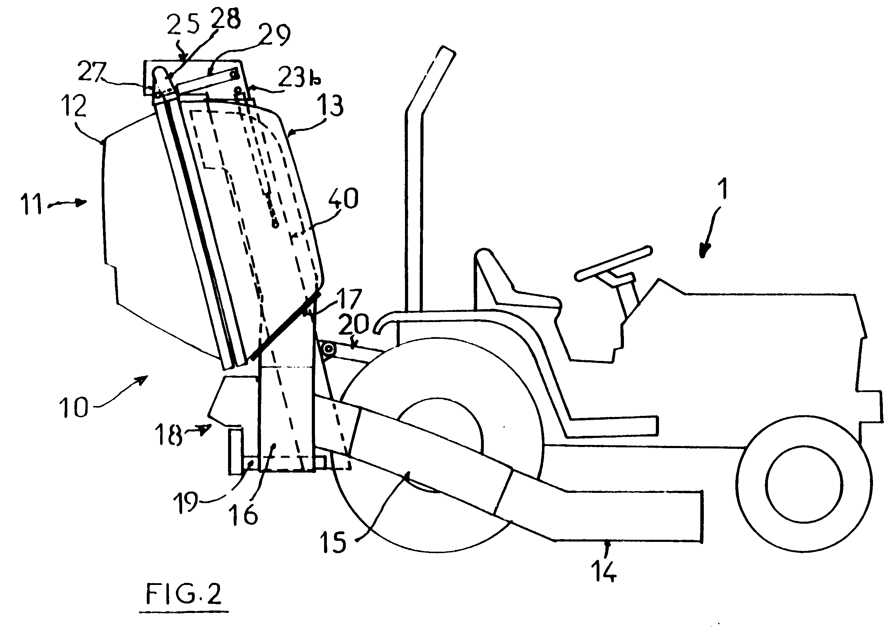

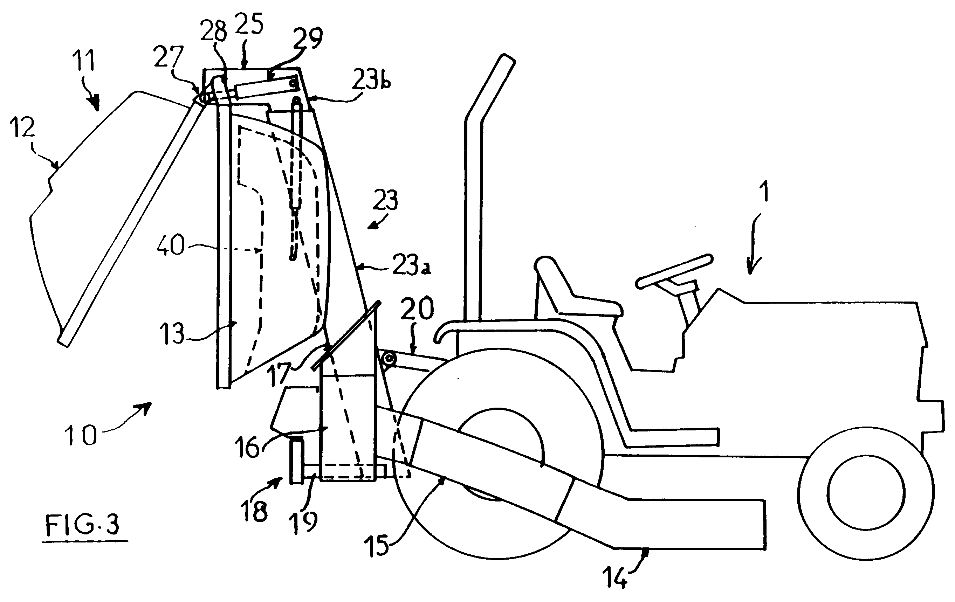

Conformément à l'invention, l'enceinte de stockage (11) est montée sur le bâti support (18) par l'intermédiaire d'une poutre (23) portée par la traverse (19), et qui est inclinée vers l'arrière par rapport au plan vertical passant par l'arrière du véhicule (1). Cette poutre (23) est constituée de deux éléments télescopiques (23a,23b) qui permettent donc d'en faire varier la hauteur et, par suite, de déplacer l'enceinte (11) depuis une position basse de remplissage (figure 2) jusqu'à une position élevée (figure 3). Les déplacements des éléments télescopiques (23a,23b) sont obtenus par l'intermédiaire d'un vérin (32) représenté uniquement aux figures 8a,8b et 8c.

Sur le bâti (18) ainsi constitué par la traverse (19) et la poutre (23), sont montées d'une part la turbine (16) et, d'autre part, l'enceinte de stockage proprement dite (11). La turbine (16) est montée latéralement sur la traverse (19) et est raccordée au conduit de transfert (15) associé à l'ensemble de prélèvement de la matière (14). La turbine (16) est entraînée par la prise de force arrière conventionnelle du tracteur par l'intermédiaire d'une courroie de transmission (24) (voir figure 7).

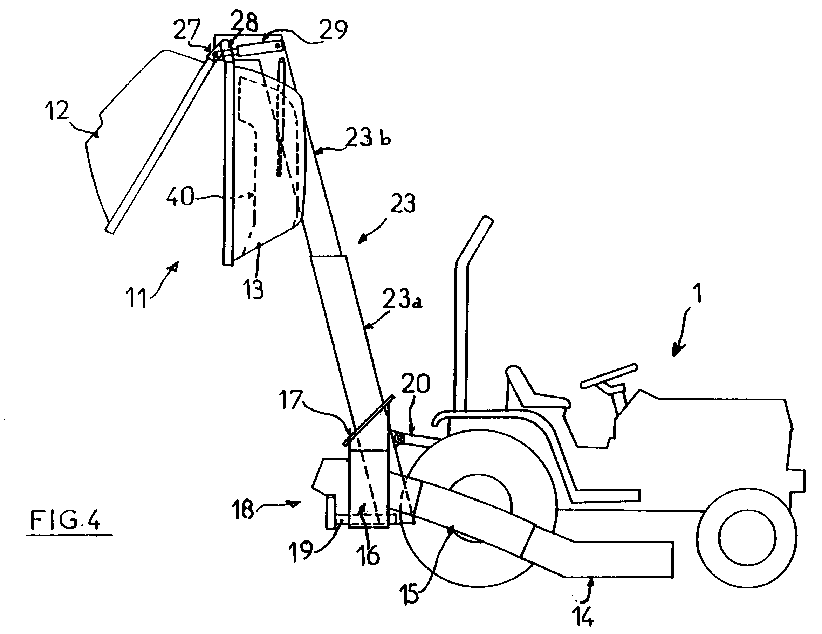

L'enceinte de stockage (11) est, quant à elle, montée à l'extrémité libre (25) en forme de potence de la poutre télescopique (23). Le montage de l'enceinte (11) à l'extrémité (25) de la poutre télescopique (23), est réalisé par l'intermédiaire d'un ensemble articulé, autour d'un axe (26) (voir figure 5) et comprenant essentiellement deux biellettes (27,28) soumises à l'action d'un vérin (29), de préférence à double effet. Un tel ensemble permet d'une part, de maintenir les deux coques élémentaires (12,13) de l'enceinte accolées l'une contre l'autre lorsque les éléments télescopiques de la poutre (23) sont en position rétractée (figures 2 et 5) pour réaliser l'opération de remplissage et, d'autre part, d'assurer l'ouverture des coques (12,13) l'une par rapport à l'autre, et ce aussi bien en position basse (figure 3) qu'à tout niveau par rapport au sol en fonction du déploiement des parties élémentaires de la poutre (23) pour effectuer l'opération de déchargement de la matière stockée (la figure 4 illustre le cas où le déchargement se fait au niveau le plus élevé). Des systèmes du type "compas à gaz" sont associés à l'enceinte pour limiter les balancements.

La poutre télescopique de maintien (23) a de préférence une section transversale de forme tubulaire carrée et la coque (13) a, quant à elle, un fond profilé de telle sorte que cette coque vienne épouser le contour de la poutre lorsque l'enceinte est en position de remplissage (figure 2). Une telle conception permet de rapprocher le centre de gravité de l'enceinte de stockage le plus près possible de l'arrière du tracteur et limite également les déplacements latéraux de l'enceinte lors de la phase de remplissage.

L'inclinaison de la poutre (23) par rapport à la verticale est avantageusement comprise entre 15 et 20°, ce qui permet d'avoir un dégagement automatique de l'enceinte par rapport à l'arrière du tracteur lors de l'opération de déchargement.

La turbine (16) portée par la traverse et qui permet d'assurer le transfert depuis la zone de prélèvement jusqu'à l'intérieur de l'enceinte (11), est positionnée sur la traverse (19), de telle sorte que lorque l'enceinte (11) est en position basse de remplissage, la sortie (17) de ladite turbine se trouve positionnée en coïncidence avec l'entrée d'un conduit (40) disposé à l'intérieur de la coque (13) et qui s'étend sur toute la hauteur de l'enceinte. Ce conduit interne permet de déverser la matière (herbe..) par la partie supérieure de l'enceinte (11) et évite également que ladite matière ne s'échappe de l'enceinte lorsque celle-ci est désacouplée de la turbine (16) et que l'opération d'ouverture n'est pas encore commandée.

Différents moyens peuvent être envisagés pour commander les phases d'ouverture et de fermeture des deux coques (12,13) constituant l'enceinte (11).

Dans la forme de réalisation préférentielle illustrée dans les schémas annexés, cette commande est réalisée, comme dit précédemment, par l'intermédiaire d'un vérin hydraulique à double effet (29) agissant sur le système à biellettes articulées (27,28) associé aux deux coques (12,13). Une telle solution permet de réaliser l'opération de déchargement à tout niveau depuis une position basse lorsque la matière doit être simplement déversée sur le sol et qu'il est donc inutile de relever l'enceinte jusqu'à une position haute correspondant au déploiement maximum de la poutre télescopique (13) lorsque le déversement de matière doit être effectué à un niveau plus élevé.

La commande du vérin hydraulique (29) permettant d'écarter et de rapprocher les deux coques (12,13), peut être réalisée de différentes manières, par exemple en employant un circuit d'alimentation indépendant (30) du circuit d'alimentation du vérin (32) commandant les déplacements de la poutre télescopique (23) comme cela est représenté à la figure 8a. Une telle solution qui donne satisfaction d'un point de vue technique, présente cependant comme inconvénient de nécessiter deux systèmes permettant d'absorber les différences de longueur des circuits d'alimentation.

Les figures 8b et 8c illustrent deux variantes dans lesquelles l'alimentation du vérin de commande (29) d'ouverture et de fermeture des coques, est pilotée par l'intermédiaire du vérin de montée (32) commandant le déploiement de la poutre télescopique. Dans le mode de réalisation de la figure 8b, le vérin de commande (29) est alimenté par un circuit hydraulique piloté par une vanne, alors que dans la forme de réalisation illustrée à la figure 8c, le vérin (29) est piloté également par un vérin de montée (32), mais comporte sur son circuit d'alimentation, un accumulateur et une vanne de séquence permettant de n'avoir qu'un seul conduit (34) dont la longueur varie.

Une telle commande de l'ouverture et de la fermeture des coques par l'intermédiaire d'un vérin hydaulique, implique, comme dit précédemment, de pouvoir absorber les différences de longueur dans le circuit d'alimentation du vérin lors du déploiement de la poutre télescopique (23). S'il est possible d'utiliser un système enrouleur conventionnel, un moyen simple permettant de compenser ces différences de longueur peut être réalisé comme illustré à la figure 7 en disposant le conduit de raccordement (34) sous la forme d'une boucle sur la poutre (23), ladite boucle passant, d'une part autour d'une poulie de renvoi (35) et, d'autre part, étant soumise à l'action d'un système de rappel élastique (36) de type "sandow".

Enfin, si le maintien en position fermée des deux coques peut être assuré par la seule action des moyens de rappel, un verrou additionnel de blocage et d'immobilisation (37) (voir figure 5), peut également être prévu. Un tel verrou est monté pivotant sur la base de la poutre de maintien (19) et est soumis à l'action d'un ressort (38) qui tend à le repousser. En position fermée, les deux coques sont donc maintenues l'une contre l'autre. Lorsque l'on procède au relèvement des deux coques, elles s'échappent automatiquement à l'action du verrou (37) et il est donc possible de les ouvrir. La remise en place dudit verrou est obtenue automatiquement lorsque les coques redescendent par appui et glissement contre la rampe extrême.

Bien entendu, l'invention n'est pas limitée à l'exemple de réalisation décrit précédemment, mais elle en couvre toutes les variantes réalisées dans le même esprit. Ainsi, il pourrait être envisagé de réaliser un véhicule dans lequel le dispositif conforme à l'invention est intégré et n'est pas amovible. Par ailleurs, si les moyens de commande de l'ouverture et de fermeture des deux demi-coques est de préférence réalisé par l'intermédiaire d'un vérin, il pourrait être envisagé d'utiliser un système comportant des biellettes articulées autour d'un axe de pivotement, et dont les déplacements sont commandés par des tirants télescopiques.

## Revendications

1. Appareillage apte à assurer le prélèvement sur le sol de produits en vrac (herbes, feuilles...) et à assurer leur stockage en vue de les transférer depuis le site de prélèvement jusqu'à une zone de déchargement, et adapté à être monté à l'arrière d'un véhicule tracteur (1), l'appareillage comprenant :
- une enceinte de stockage (11) constituée de deux coques (12,13) qui définissent entre elles le volume de stockage proprement dit et qui est connectable au conduit de transfert associé à la tête de coupe et/ou de prélèvement (14) prévue sur le véhicule trateur (1), lesdites coques (12,13) pouvant être écartées l'une de l'autre lorsque l'on souhaite procéder après remplissage à l'opération de déchargement, ladite enceinte étant montée sur un ensemble télescopique permettant de la déplacer en hauteur pour effectuer l'opération de déchargement à différents niveaux,
- une turbine (16) et son dispositif d'entraînement permettant d'assurer le transfert de la matière (herbe, feuilles...) depuis la zone de prélèvement jusqu'à l'intérieur de l'enceinte (11), caractérisé en ce que :
- ledit appareillage est adapté à être monté fixe directement sur et à l'arrière du véhicule tracteur (1) par l'intermédiaire d'un bâti support (18) comportant une traverse horizontale amovible (19) raccordable aux trois points d'attelage que comporte tout tracteur conventionnel ;
- l'ensemble télescopique de levage est constitué par une poutre (23) inclinée vers l'arrière et dont l'extrémité libre (25) en forme de potence déborde vers l'arrière par rapport au bâti support (18) ;
- l'enceinte de stockage proprement dite (11) est montée à l'extrémité libre (25) en forme de potence de la poutre télescopique (23) par l'intermédiaire d'une articulation (26,27,28,29) permettant d'une part, de maintenir les deux coques élémentaires (12,13) de l'enceinte (11) accolées l'une contre l'autre et d'autre part, d'assurer l'ouverture desdites coques (12,13) pour effectuer l'opération de déchargement, et ce aussi bien en position basse qu'à tout niveau par rapport au sol en fonction du déploiement des parties élémentaires (23a, 23b) de la poutre télescopique (23).

2. Appareillage selon la revendication 1, caractérisé en ce que la fixation du bâti support (18) aux trois points d'attelage que comporte le tracteur (1), est réalisé par l'intermédiaire d'attaches réglables (20,21), les deux points d'attelage inférieurs étant préalablement immobilisés dans une position déterminée.

3. Appareillage selon l'une des revendications 1 et 2, caractérisé en ce que la poutre télescopique (23) de maintien a une section transversale de forme tubulaire carrée, la coque (13) lui faisant face ayant un fond profilé de telle sorte qu'il vienne épouser le contour de cette poutre lorsque l'enceinte (11) est en position de remplissage.

4. Appareillage selon l'une des revendications 1 à 3, caractérisé en ce que l'inclinaison de la poutre (23) de maintien est avantageusement comprise entre 15 et 20° par rapport à la verticale.

5. Appareillage selon l'une des revendications 1 à 4, caractérisé en ce que la turbine (16) (et ses moyens d'entraînement) portée par la traverse (19) et qui permet d'assurer le transfert depuis la zone de prélèvement jusqu'à l'intérieur de l'enceinte (11), est positionnée de telle sorte que lorsque l'enceinte (11) est en position basse de remplissage, sa sortie (17) se trouve positionnée en coïncidence avec l'entrée d'un conduit (40) de dimensions correspondantes s'étendant sur toute la hauteur de l'enceinte (11) et à l'intérieur de celle-ci, et qui permet de déverser le produit par sa partie supérieure.

6. Appareillage selon l'une des revendications 1 à 5, caractérisé en ce que les moyens de commande permettant de faire varier la longueur de la poutre télescopique, et ceux assurant l'ouverture et la fermeture des deux demi-coques (12,13) de l'enceinte (11), sont constitués par des vérins hydrauliques (29,32).

7. Appareillage selon la revendication 6, caractérisé en ce que les circuits d'alimentation des vérins hydrauliques (29,32) sont soit des circuits indépendants, soit des circuits associés entre eux, les différences de longueur des conduits lors du déploiement de la poutre télescopique (23) étant compensées en faisant passer lesdits conduits autour de poulies de renvoi prévues sur la poutre et les soumettant à l'action d'un système de rappel élastique, avantageusement de type sandow.

8. Appareillage selon l'une des revendications 1 à 7, caractérisé en ce que les parois de l'enceinte (11) sont conçues de manière à pouvoir permettre un échappement de l'air lorsque la turbine (16) est en action.

9. Appareillage selon l'une des revendications 1 à 8, caractérisé en ce qu'il comporte des pieds amovibles télescopiques (22a,22b,22c), de longueur réglable, permettant d'assurer le maintien de l'ensemble lorsqu'il n'est pas utilisé, et facilitant sa mise en place sur le véhicule tracteur auquel il doit être associé, les moyens de réglage de la longueur desdits pieds amovibles étant constitués par un système à vis sans fin de type "cric".

10. Appareillage selon l'une des revendications 1 à 9, caractérisé en ce qu'il comporte un verrou additionnel de blocage et d'immobilisation (37) des deux demi-coques (12,13), ledit verrou étant monté pivotant sur la base de la poutre de maintien (23) et étant soumis à l'action d'un ressort (38) qui tend à le repousser et permettant, lorsque l'on procède au relèvement des deux coques, un échappement automatique, la remise en place dudit verrou étant obtenue automatiquement lorsque les coques redescendent par appui et glissement contre une rampe.

11. Véhicule équipé d'un appareillage selon l'une des revendications 1 à 10.

## Claims

1. Apparatus capable of picking up products in loose form (grass, leaves...) from the ground and storing them with a view to transferring them from the pick-up site to a dumping area and designed to be mounted on the rear of a towing vehicle (1), the apparatus comprising:
- a storage container (11) made up of two shells (12,13) which define between them the storage volume proper and which can be connected to the transfer pipe associated with the cutting and/or picking up head (14) provided on the towing vehicle (1), it being possible for the said shells (12,13) to be moved away from one another when it is desired, after filling, to proceed with the dumping operation, the said container being mounted on a telescopic assembly making it possible to move it in terms of height in order to carry out the dumping operation at various levels,
- a turbine (16) and its drive device making it possible to transfer the material (grass, leaves...) from the pick-up area into the container (11), characterized in that:
- the said apparatus is designed to be mounted stationary directly on and at the rear of the towing vehicle (1) by means of a supporting structure (18) including a removable horizontal cross-beam (19) which can be coupled to the three hitching points which any conventional tractor includes;
- the telescopic lifting assembly is made up of a beam (23) inclined backwards, and the bracket-shaped free end (25) of which overhangs backwards relative to the support structure (18);
- the storage container proper (11) is mounted at the bracket-shaped free end (25) of the telescopic beam (23) by means of a joint (26,27,28,29) making it possible, on the one hand, to keep the two elemental shells (12,13) of the container (11) pressed against one another and, on the other hand, to open the said shells (12,13) in order to perform the dumping operation, this being equally true in a low position and at any level relative to the ground depending on the deployment of the elemental parts (23a,23b) of the telescopic beam (23).

2. Apparatus according to Claim 1, characterized in that the supporting structure (18) is fastened to the three hitching points that the tractor (1) includes by means of adjustable couplings (20,21), the two lower hitching points being immobilized in a given position beforehand.

3. Apparatus according to either of Claims 1 and 2, characterized in that the telescopic support beam (23) has a transverse section of square tubular shape, the shell (13) facing it having a shaped bottom so that it can match the outline of this beam when the container (11) is in the filling position.

4. Apparatus according to one of Claims 1 to 3, characterized in that the inclination of the support beam (23) is advantageously between 15 and 20° relative to the vertical.

5. Apparatus according to one of Claims 1 to 4, characterized in that the turbine (16) (and its drive means) carried by the cross-beam (19) and which makes it possible to carry out transfer from the pick-up area to inside the container (11) is positioned such that when the container (11) is in the low filling position, its outlet (17) is positioned in coincidence with the inlet of a pipe (40) of corresponding dimensions extending over the entire height of the container (11) and inside the latter, and which makes it possible to pour the product out from its upper part.

6. Apparatus according to one of Claims 1 to 5, characterized in that the operating means making it possible to vary the length of the telescopic beam, and those opening and closing the two half shells (12,13) of the container (11) consist of hydraulic cylinders (29,31).

7. Apparatus according to Claim 6, characterized in that the supply circuits for the hydraulic cylinders (29,32) are either independent circuits or mutually associated circuits, the differences in length of the pipes during the deployment of the telescopic beam (23) being compensated for by causing the said pipes to run around return pulleys provided on the beam and subjecting them to the action of an elastic return system, advantageously of the sandow type.

8. Apparatus according to one of Claims 1 to 7, characterized in that the walls of the container (11) are designed so that they can allow air to escape when the turbine (16) is in operation.

9. Apparatus according to one of Claims 1 to 8, characterized in that it includes removable telescopic legs (22a,22b,22c) of adjustable length, making it possible to hold the assembly when it is not being used, and facilitating its installation on the towing vehicle with which it is to be associated, the means for adjusting the length of the said removable legs consisting of an endless screw system of the "jack" type.

10. Apparatus according to one of Claims 1 to 9, characterized in that it includes an additional catch (37) for locking and immobilizing the two half shells (12,13), the said catch being mounted so that it pivots on the base of the support beam (23) and being subjected to the action of a spring (38) which tends to push it back and allowing automatic escapement when the two shells are being lifted up, the said catch resuming its place automatically when the shells come back down by bearing and sliding against a ramp.

11. Vehicle fitted with apparatus according to one of Claims 1 to 10.

## Patentansprüche

1. Apparatur zum Sicherstellen der Aufnahme loser Gegenstände (Gras, Blätter...) vom Boden und zum Sicherstellen ihrer Speicherung hinsichtlich ihrer Beförderung vom Ort der Aufnahme bis in einen Bereich des Entladens, wobei die Apparatur an eine Anbringung an das Heck eines Traktorfahrzeuges (1) angepaßt ist und umfaßt:
- ein aus zwei zwischen sich das eigentliche Speichervolumen definierenden Schalen (12, 13) bestehendes Speicherbehältnis (11), das an einen Förderkanal anschließbar ist, der dem auf dem Traktorfahrzeug (1) vorgesehenen Schneide- und/oder Aufnahmekopf (14) zugeordnet ist, wobei die Schalen (12, 13) voneinander getrennt werden können, wenn man nach dem Auffüllen den Entladevorgang vornehmen möchte, und wobei das Behältnis auf einer teleskopischen Vorrichtung angebracht ist, die die Höhenverschiebung des Behältnisses ermöglicht, um den Entladevorgang in verschiedenen Höhen auszuführen,
- eine Turbine (16) mit Antriebsvorrichtung, die die Beförderung des Materials (Gras, Blätter...) von dem Bereich der Aufnahme bis in das Innere des Behältnisses (11) sicherstellt, dadurch gekennzeichnet, daß:
- die Apparatur mittels eines Trägerrahmens (18), der einen mit einer Dreipunktkupplung, die jedes herkömmliche Traktorfahrzeug aufweist, verbindbaren beweglichen horizontalen Querträger aufweist, unmittelbar, fest und oben am Heck des Traktorfahrzeuges (1) befestigbar ist;
- die teleskopische Hebevorrichtung aus einem nach hinten geneigten Arm (23) besteht, dessen äußeres freies Ende (25) in Gestalt eines Auslegers bezüglich des Trägerrahmens (18) nach hinten hinausragt;
- das eigentliche Speicherbehältnis (11) an dem äußeren freien, als Ausleger gestalteten Ende (25) des teleskopischen Arms (23) mittels eines Gelenks (26, 27, 28, 29) befestigt ist, das es ermöglicht, einerseits die zwei elementaren Schalen (12, 13) des Behältnisses (11) geschlossen gegeneinander zu halten und andererseits das Öffnen der Schalen (12, 13) sicherzustellen, um den Entladevorgang auszuführen, und dies sowohl in einer unteren Stellung als auch auf jedem Niveau bezüglich des Bodens in Abhängigkeit von der teleskopischen Verlängerung der elementaren Teile (23a, 23b) des teleskopischen Arms (23).

2. Apparatur nach Anspruch 1, dadurch gekennzeichnet, daß die Befestigung des Trägerrahmens (18) an der Dreipunktkupplung, die das Traktorfahrzeug (1) aufweist, mit Hilfe von einstellbaren Halterungen erfolgt, wobei die zwei unteren Punkte der Kupplung zuvor in einer vorbestimmten Position festgestellt werden.

3. Apparatur nach einem der Ansprüche 1 und 2, dadurch gekennzeichnet, daß der teleskopische Haltearm (23) einen quadratischen röhrenförmigen Querschnitt aufweist, wobei die ihm benachbarte Schale (13) einen derartigen Profilboden besitzt, daß sie sich an die Kontur dieses Arms anschmiegt, wenn sich das Behältnis (11) in der Einfüllstellung befindet.

4. Apparatur nach einem der Ansprüche 1 bis 3, dadurch gekennzeichnet, daß die Neigung des Haltearms (23) in vorteilhafter Weise zwischen 15 und 20° in bezug auf die Vertikale beträgt.

5. Apparatur nach einem der Ansprüche 1 bis 4, dadurch gekennzeichnet, daß die von dem Querträger (19) getragene Turbine (16) (und ihre Antriebsmittel), die die Beförderung von dem Bereich der Aufnahme bis in das Innere des Behältnisses (11) sicherstellt, so angeordnet ist, daß sich ihr Ausgang (17) mit dem Eingang eines Kanals (40) entsprechender Abmessungen in deckungsgleicher Anordnung befindet, wenn sich das Behältnis (11) in einer unteren Einfüllstellung befindet, wobei sich der Kanal über die gesamte Höhe und im Inneren des Behältnisses (11) erstreckt und es ermöglicht, einen Gegenstand aus seinem obersten Teil auszuschütten.

6. Apparatur nach einem der Ansprüche 1 bis 5, dadurch gekennzeichnet, daß die Betätigungsmittel, die es ermöglichen, die Länge des teleskopischen Arms zu variieren, und diejenigen, die das Öffnen und Schließen der zwei Halbschalen (12, 13) des Behältnisses (11) sicherstellen, aus hydraulischen Zylindern (39, 32) bestehen.

7. Apparatur nach Anspruch 6, dadurch gekennzeichnet, daß die Speisekreise der hydraulischen Zylinder (29, 32) entweder unabhängige Kreise oder untereinander verbundene Kreise sind, wobei die Unterschiede in der Länge der Leitungen bei der teleskopischen Verlängerung des teleskopischen Arms (23) ausgeglichen werden, indem die Leitungen über Umlenkrollen laufen, die auf dem Arm vorgesehen sind, und der Wirkung eines elastischen Rückstellsystems ausgesetzt sind, vorteilhafterweise von der Art eines Gummizugs.

8. Apparatur nach einem der Ansprüche 1 bis 7, dadurch gekennzeichnet, daß die Wandungen des Behältnisses (11) derart ausgebildet sind, daß sie einen Luftaustritt ermöglichen können, wenn die Turbine (16) in Betrieb ist.

9. Apparatur nach einem der Ansprüche 1 bis 8, dadurch gekennzeichnet, daß sie bewegliche teleskopische Füße (22a, 22b, 22c) mit einstellbarer Länge aufweist, die die Aufrechthaltung der Vorrichtung sicherstellen, wenn sie nicht benutzt wird, und die ihr Instellungbringen auf dem Traktorfahrzeug, auf dem sie angebracht werden soll, erleichtern, wobei die Mittel zum Einstellen der Länge der beweglichen Füße aus einem Schneckenantriebssystem von der Art eines "Wagenhebers" bestehen.

10. Apparatur nach einem der Ansprüche 1 bis 9, dadurch gekennzeichnet, daß sie einen zusätzlichen Verschluß für die Verriegelung und Feststellung (37) der zwei Halbschalen (12, 13) aufweist, wobei der Verschluß drehbar auf der Unterseite des Haltearms (23) befestigt ist und der Wirkung einer Feder (38) ausgesetzt ist, die den Verschluß zurückdrückt und ein automatisches Lösen ermöglicht, wenn das Anheben der zwei Schalen erfolgt, wobei das Wiedereinrücken des Verschlusses automatisch durch Aufsetzen und Aufgleiten auf eine schiefe Ebene erzielt wird, wenn sich die Schalen abwärts bewegen.

11. Fahrzeug, das mit einer Apparatur nach einem der Ansprüche 1 bis 10 ausgerüstet ist.
